# EUROPEAN PATENT APPLICATION

(11) **EP 3 435 473 A1**
(43) Date of publication of application: **30.01.2019**
(21) Application number: 18185824.2
(22) Date of filing: 26.07.2018
(51) Int. Cl.: H01M 10/36, H01M 12/08

(54) **A HYBRID AQUEOUS RECHARGEABLE BATTERY**

(30) Priority: 27.07.2017 CN 201710622993
(71) Applicant: Nanjing Tech University, Nanjing Jiangsu 211800 (CN)
(72) Inventor: Yuan, Xinhai, Nanjing, Jiangsu 211800 (CN); Mo, Jun, Nanjing, Jiangsu 211800 (CN); Zhou, Lei, Nanjing, Jiangsu 211800 (CN); Wu, Xiongwei, Changsha, Hunan 410128 (CN); Zhu, Yusong, Nanjing, Jiangsu 211800 (CN); Fu, Lijun, Nanjing, Jiangsu 211800 (CN); Wu, Yuping, Nanjing, Jiangsu 211800 (CN)
(74) Representative: Büchel, Edwin

(57) **Abstract**

The disclosure relates to a hybrid aqueous rechargeable battery, wherein the battery comprises a positive electrode and a negative electrode, and wherein the positive electrode and the negative electrode are in aqueous electrolytes with different pHs respectively. The hybrid aqueous rechargeable battery has a working voltage at least 0.6 V higher than the conventional aqueous lithium batteries and a theoretical energy density at least 60 Wh/kg higher. The hybrid aqueous rechargeable battery can be used for storage and discharge of electricity, etc.

## Description

### TECHNICAL FIELD

The present invention relates to a battery, in particular to a rechargeable battery in which the positive electrode and the negative electrode are in aqueous electrolytes with different pHs.

### TECHNICAL BACKGROUND

Lithium-ion batteries have the characteristics of high energy density, large specific power, good cycling performance, no memory effect, no pollution, etc., therefore it presents excellent economic, social and strategic significance, and have become the most attractive green chemical power source nowadays (see Wu Yuping, Dai Xiaobing, Ma Junqi, Cheng Yujiang, Lithium Ion Batteries - Application and Practice, Beijing Chemical Industry Press, 2004). However, lithium-ion batteries are very sensitive to moisture and are very demanding in the assembly environment (for example, see Zhou Qing *et al., Water removal apparatus and method for improving the water content of positive and negative electrode pieces of lithium ion batteries,* Chinese invention patent application with the application No. CN201210531150.6 and the application date of December 11, 2012), so the production cost is relatively high, and the popularization in electric vehicles still has to rely on government financial subsidies now. At the same time, due to the use of flammable organic electrolytes, safety measures such as water cooling etc. must be used (see, for example, Cao Qingshan, *Special battery for electric vehicles,* Chinese utility model patent application with the application No. CN201120229436.X and the application date of July 1, 2011), in order to improve the reliability of the large-scale lithium ion battery.

The aqueous solution - metal ion batteries represented by the aqueous lithium batteries have the advantages of high ion conductivity, low cost, easy mass production, safety, environmental friendliness and the like, and have become the preferred direction for the development of the next generation of the large-scale energy storage batteries. However, due to the limitation of the theoretical decomposition voltage of water (1.229 V), its charge and discharge voltages are much lower than 2 V. Even in the hydrogel polymeric electrolyte system, it is impossible to increase the theoretical decomposition voltage of water and the working voltages of the rechargeable batteries which use hydrogels (see Xie Yiming et al., Preparation of a novel superabsorbent composite hydrogel electrolyte, Journal of Huaqiao University (Natural Science Edition), 2007, Vol. 28, No. 2, pp. 155-158), so the energy density is much lower than that of lithium-ion batteries and therefore it is far from achieving the purpose of high energy density.

Zinc metal is widely used in alkaline batteries and acid batteries due to its abundant reserves, low redox potential, high theoretical capacity (820 mAh/g), safe use, no pollution, and low price. Alkaline batteries are mainly zinc-manganese batteries, which can only be used as disposable batteries due to the poor cycling performance of the positive electrode material in the alkaline electrolyte. Acidic batteries, also known as zinc-ion batteries, rely mainly on the movement of Zn²⁺ and other metal ions (such as Li⁺, Na⁺) between the positive and negative electrodes to achieve charge and discharge. Batteries of this kind have higher energy density and better cycling performance, but the redox potential of the Zn negative electrode under acidic conditions is higher than that under alkaline conditions, so that the discharge voltage is relatively low and cannot exceed 2 V.

Magnesium and aluminium are extremely attractive materials for the negative electrode of primary batteries, which have lower redox potential, smaller atomic weight and a higher specific capacitancy by mass or volume (see Wang Jiqiang, et al., Battery manual (the Fourth Edition of the Original), Beijing Chemical Industry Press, 2013). In addition, the reserves of magnesium and aluminium are very abundant, and the price is low relative to lithium, thus they have a good application value. However, there is currently no report on the rechargeable batteries in which they have high voltage (> 2 V) in an aqueous solution.

### CONTENT OF THE INVENTION

The object of the present invention is to overcome the above-mentioned disadvantages of the zinc-based batteries and the magnesium or aluminium batteries, and to provide a hybrid aqueous rechargeable battery having high energy density to overcome the problems of low voltage, low energy density and the like of the aqueous solution batteries.

The object is achieved by a hybrid aqueous rechargeable battery according to the present invention, wherein the battery comprises a positive electrode and a negative electrode, and wherein the positive electrode and the negative electrode are in aqueous electrolytes with different pHs respectively.

In a preferred embodiment of the present invention, the pH of the positive electrode electrolyte is lower than that of the negative electrode electrolyte.

In particular, in the rechargeable battery of the present invention, the negative electrode may be in an alkaline or neutral aqueous electrolyte (aqueous solution or hydrogel electrolyte); the positive electrode may be in a neutral, weakly acidic or acidic aqueous electrolyte. Specifically, when the negative electrode is in an alkaline electrolyte, the positive electrode may be in a neutral, weakly acidic or acidic electrolyte; when the negative electrode is in a neutral electrolyte, the positive electrode may be in a weakly acidic or acidic electrolyte. In the present invention, "alkaline" means that the pH is greater than 7, "neutral" means that the pH is equal to 7, "weakly acidic" means 4 < pH < 7, and "acidic" means pH ≤ 4. In addition, the aqueous electrolyte of the present invention may be an aqueous solution or hydrogel electrolyte. In the present invention, "aqueous" means that the electrolyte used in the present invention is an aqueous solution or hydrogel electrolyte.

In the present invention, the alkaline electrolyte may be an aqueous solution or hydrogel electrolyte comprising lithium hydroxide, sodium hydroxide, potassium hydroxide or a mixture thereof, or a mixture of the aqueous solution electrolyte and the hydrogel electrolyte, wherein the aqueous solution or the hydrogel may comprise other lithium salt, potassium salt, sodium salt, aluminium salt, zinc salt or the combination thereof. Said other lithium salt, potassium salt, sodium salt, aluminium salt, and zinc salt are soluble in water, such as acetate, nitrate, sulfate, of lithium, potassium, sodium, aluminium or zinc, and the like.

In the present invention, the neutral or weakly acidic electrolyte may be (a) an aqueous solution or hydrogel electrolyte comprising a lithium salt, a sodium salt, a potassium salt, a zinc salt, an aluminium salt, a magnesium salt or a mixture thereof, or a mixture of the aqueous solution electrolyte and the hydrogel electrolyte, which may comprise an anion such as Cl⁻, Br⁻, ClO₄⁻ or the like; or (b) an aqueous solution or hydrogel electrolyte comprising a redox couple of Br₂/Br⁻, (Br⁻, Cl⁻)/ClBr₂⁻ or Fe³⁺/Fe²⁺ and comprising a lithium salt, a sodium salt, a potassium salt or a mixture thereof, or a mixture of the aqueous solution electrolyte and the hydrogel electrolyte. In addition, the neutral or weakly acidic electrolyte may comprise methanol.

In the present invention, the weakly acidic electrolyte may be (a) a mixed aqueous solution or hydrogel electrolyte of an acidic aqueous solution comprising a redox couple of Cl₂/Cl⁻, Br₂/Br⁻, (Br⁻,Cl⁻)/ClBr₂⁻, Fe³⁺/Fe²⁺, VO₂⁺/VO²⁺, Ce⁴⁺/Ce³⁺, Cr³⁺/Cr²⁺, CrO₄²⁺/Cr³⁺, NpO₂²⁺/NpO₂⁺, IO₃⁻/I₂, Pb²⁺/PbO₂ and the like or a mixture thereof with an aqueous solution comprising a lithium salt, a potassium salt or a sodium salt, or a mixture of the aqueous solution electrolyte and the hydrogel electrolyte; or (b) an aqueous sulphuric acid solution or hydrogel electrolyte comprising a lithium salt, a potassium salt, a sodium salt or a mixture thereof, or a mixture of the aqueous solution electrolyte and the hydrogel electrolyte.

The hybrid aqueous rechargeable battery of the present invention comprises a positive electrode, wherein the positive electrode material may be: (a) a positive electrode material capable of reversibly intercalating and deintercalating metal ions Li⁺, Na⁺, K⁺, Zn²⁺, Mg²⁺ or Al³⁺, including, for example, LiCoO₂, LiNiO₂, LiMn₂O₄, LiFePO₄, LiFeSO₄F, NaCoO₂, NaNiO₂, NaMn₂O₄, NaFePO₄, KCoO₂, KNiO₂, KMn₂O₄, KFePO₄, MnO₂, Prussian blue compounds (cobalt ferricyanide, copper ferricyanide, etc.) or a mixture thereof, or an inclusion of these substances (an inclusion means that one, two or more elements of these compounds are partially replaced by one, two or more other elements, but this does not change the crystal form of these compounds), or a composition comprising these compounds, or a mixture thereof, or an inclusion thereof, including coated composites ("coated" means forming a layer of at least 1 nm of a material different from the compounds, such as carbon materials, polypyrrole, etc. on the surface of the material composed of these compounds), or (b) an aqueous solution comprising Br₂/Br⁻, (Br⁻, Cl⁻)/ClBr₂⁻ or Fe³⁺/Fe²⁺ (in which a carbon material such as activated carbon, graphene, etc., or a metal oxide such as MnO₂, Mn₃O₄, etc. is used as a catalyst for the electrochemical reaction of the positive electrode), or (c) air or oxygen (in which a Pt/C electrode or a metal oxide, carbon material and the like supported on a Pt/C electrode is used as a catalyst for the electrochemical reaction of the positive electrode), or (d) an acidic aqueous solution comprising a redox couple of Cl₂/Cl⁻, Br₂/Br⁻, (Br⁻, Cl⁻)/ClBr₂⁻, Fe³⁺/Fe²⁺, VO₂⁺/VO²⁺, Ce⁴⁺/Ce³⁺, Cr³⁺/Cr²⁺, CrO₄²⁺/Cr³⁺, NpO₂²⁺/NpO₂⁺ or IO₃⁻/I₂, or (e) PbO₂ and its modified product (i.e., a substance obtained by mixing or compounding PbO₂ with other materials, such as polymer-coated PbO₂, such as polypyrrole-coated PbO₂, or a substance obtained by mixing or compounding PbO₂ with a conductive material).

In particular, when the positive electrode is in a neutral or weakly acidic electrolyte, the positive electrode material is preferably: (a) a positive electrode material capable of reversibly intercalating and deintercalating metal ions Li⁺, Na⁺, K+, Zn²⁺, Mg²⁺ or Al³⁺, or (b) an aqueous solution comprising Br₂/Br⁻, (Br⁻, Cl⁻)/ClBr₂⁻ or Fe³⁺/Fe²⁺ (in which a carbon material such as activated carbon, graphene, etc., or a metal oxide such as MnO₂, Mn₃O₄, etc. is used as a catalyst for the electrochemical reaction of the positive electrode), or (c) air or oxygen (in which a Pt/C electrode or a metal oxide, a carbon material and the like supported on a Pt/C electrode is used as a catalyst for the electrochemical reaction of the positive electrode). In a preferred embodiment, when the positive electrode is in a neutral or weakly acidic electrolyte, the positive electrode material is more preferably a positive electrode material capable of reversibly intercalating and deintercalating metal ions Li⁺, Na⁺, K⁺, Zn²⁺, Mg²⁺ or Al³⁺; further preferably a positive electrode material capable of reversibly intercalating and deintercalating metal ions Li⁺, Na⁺, Zn²⁺ or Al³⁺; and most preferably a positive electrode material capable of reversibly intercalating and deintercalating metal ion Li⁺, Zn²⁺ or Al³⁺.

In particular, when the positive electrode is in an acidic electrolyte, the positive electrode material is (a) an acidic aqueous solution comprising a redox couple of Cl₂/Cl⁻, Br₂/Br⁻, (Br⁻,Cl⁻)/ClBr₂⁻, Fe³⁺/Fe²⁺, VO₂⁺/VO²⁺, Ce⁴⁺/Ce³⁺, Cr³⁺/Cr²⁺, CrO₄²⁺/Cr³⁺, NpO₂²⁺/NpO₂⁺, or IO₃⁻/I₂, or (b) PbO₂ and its modified product (i.e., a substance obtained by mixing or compounding PbO₂ with other materials, such as polymer-coated PbO₂, such as polypyrrole-coated PbO₂, or a substance obtained by mixing or compounding PbO₂ with a conductive material). In a preferred embodiment, when the positive electrode is in an acidic electrolyte, the positive electrode material is more preferably an acidic aqueous solution comprising Br₂/Br⁻ or (Br⁻,Cl⁻)/ClBr₂⁻, or PbO₂; further preferably an acidic aqueous solution comprising Br₂/Br⁻ or PbO₂; most preferably PbO₂.

The rechargeable battery according to the present invention further comprises a separator to separate the electrolytes with different pHs from each other, wherein the separator material is different from the common separators. The common separator only separates the positive from the negative electrode, and is generally a porous polymer, an inorganic material or a composite, such as a glass fiber mat for the lead-acid battery, a non-woven fabric for the nickel-hydrogen battery, and a porous polyolefin for the lithium-ion battery, which are incapable of separating different electrolyte solutions from each other. The separator of the present invention may be (a) a polymeric cation-exchange membrane through which cations Li⁺, Na⁺, K⁺ or the like can reversibly pass, but protons cannot pass, including a cation-exchange membrane of sulfonic acid type and a cation-exchange membrane of carboxylic acid type, and a polymeric cation-exchange membrane having both sulfonate and carboxylate functional groups, an example of which is a Nafion membrane, such as a Nafion 117 membrane, or an ASTM cation-exchange membrane, said polymeric cation-exchange membrane may comprise an inorganic filler such as alumina, silica, titania, zirconium dioxide, or (b) a composite polymeric cation-exchange membrane through which cations such as Li⁺, Na⁺, K⁺ or the like can reversibly pass, but protons cannot pass, and whose composition is for example a three-layer structure of "polymeric cation-exchange membrane/polymeric electrolyte/polymeric cation-exchange membrane", in which the polymeric electrolyte is a polymeric material capable of transporting cations or anions, such as polymethyl methacrylate (PMMA) or polyethylene oxide (PEO), which may comprises a lithium salt (LiClO₄, etc.), a potassium salt (KClO₄, etc.), a sodium salt (NaClO₄, etc.), wherein the polymeric cation-exchange membrane is, for example, a Nafion membrane; or (c) a polymeric anion-exchange membrane through which anions Cl⁻, Br⁻, SO₄²⁻. NO₃⁻ or the like can reversibly pass, including for example a polymeric anion-exchange membrane comprising cations such as -NH₃⁺, -NR₂H⁺, -PR₃⁺ or the like as the reactive exchanging group, which may comprise an inorganic filler, such as a polysulfone anion-exchange membrane, polydiene dimethyl ammonium chloride, or (d) a composite polymeric cation/anion-exchange membrane, wherein when the composite polymeric cation/anion-exchange membrane is used, the cationic membrane faces the negative electrode side so that cations Li⁺, Na⁺, K⁺ or the like can reversibly pass, and the anion membrane faces the positive electrode side so that anions Cl⁻, Br⁻ or the like can reversibly pass, and wherein its composition is, for example, "polymeric cation-exchange membrane/PMMA (or PEO)/polymeric anion-exchange membrane" (in which PMMA (or PEO) may be mixed with a lithium salt (LiCl, etc.), a potassium salt (KCl, etc.), a sodium salt (NaCl, etc.), and the anions and cations in the PMMA (or PEO) layer are free to move, and perform reversible ion exchange with the positive and negative electrolytes through the anionic or cationic membranes).

In the present invention, the material of the separator is selected according to the acidity and alkalinity of the positive and negative electrolytes, thereby preventing H⁺, OH⁻ from entering the electrolyte of the other electrode through the separator, and only allowing metal ions (Li⁺, Na⁺, K⁺) or other anions (Cl⁻, Br⁻, etc.) passing through the membrane. In particular, when the negative electrode electrolyte is alkaline and the positive electrode electrolyte is neutral, a polymeric cation-exchange membrane or a composite polymeric cation-exchange membrane is selected as the separator; and when the negative electrode electrolyte is neutral and the positive electrode electrolyte is weakly acidic, a polymeric cation-exchange membrane or a composite polymeric cation-exchange membrane or a polymeric anion-exchange membrane is selected as the separator; and when the negative electrode electrolyte is alkaline and the positive electrode electrolyte is acidic, a composite polymeric cation-exchange membrane or a composite polymeric cation/anion exchange membrane is selected as the separator; and when the negative electrode electrolyte is neutral and the positive electrode electrolyte is acidic, a composite polymeric cation-exchange membrane or a polymeric anion-exchange membrane is selected as the separator.

In the present invention, the negative electrode material may be zinc, magnesium, aluminium or an alloy thereof or a modified product thereof. In particular, when the negative electrode is in an alkaline electrolyte, the negative electrode material may be zinc, magnesium, aluminium or an alloy thereof or a modified product thereof; and when the negative electrode is in a neutral electrolyte, the negative electrode material may be magnesium or an alloy thereof or a modified product thereof (this is due to the fact that magnesium has a relatively low redox potential (< -1.3 V) in a neutral electrolyte (such as an aqueous solution of magnesium chloride)).

In the present invention, the alloy of zinc, magnesium or aluminium is an alloy formed from zinc, magnesium, aluminium with other metals. In the present invention, the term "modified product" means: (a) zinc, magnesium, aluminium or an alloy formed with other metals, which is electro-deposited on other substrates (such as carbon felt, carbon paper, etc.); (b) zinc, magnesium, aluminium or an alloy formed with other metals, which is coated by other conductive material (such as carbon, etc.), said other metals including but not limited to metals having a high polarization potential such as lead, cadmium or the like.

In the present invention, the inventors have surprisingly found that by using a very suitable electrolyte system for each of the two electrode materials, the battery thus obtained not only has good cycling stability, but also has an output voltage higher and a higher energy density than that in the same electrolyte because the pH value of the positive electrode is lower than that of the negative electrode.

In a preferred embodiment of the present invention, the battery of the present invention may comprise the following four systems, depending on the electrolytes in which the positive electrode and the negative electrode are located:

### 1) the negative electrode is in an alkaline electrolyte; and the positive electrode is in a neutral electrolyte:

(1) the separator is: (a) a polymeric cation-exchange membrane through which cations Li⁺, Na⁺, K⁺ or the like can reversibly pass, but protons cannot pass, or (b) a composite polymeric cation-exchange membrane through which cations Li⁺, Na⁺, K⁺ or the like can reversibly pass, but protons cannot pass;
(2) the negative electrode is a metal zinc, magnesium, aluminium or an alloy thereof or a modified product thereof;
(3) the electrolyte on the negative electrode side is an aqueous solution or hydrogel electrolyte comprising lithium hydroxide, sodium hydroxide, potassium hydroxide or a mixture thereof, or a mixture of the aqueous solution electrolyte and the hydrogel electrolyte, wherein the aqueous solution or the hydrogel may comprise a lithium salt, a potassium salt, a sodium salt, an aluminium salt, a zinc salt or a combination thereof;
(4) the positive electrode is (a) a positive electrode material capable of reversibly intercalating and deintercalating metal ions Li⁺, Na⁺, K+, Zn²⁺, Mg²⁺ or Al³⁺, or (b) an aqueous solution comprising Br₂/Br⁻, (Br⁻, Cl⁻)/ClBr₂⁻ or Fe³⁺/Fe²⁺ (in which a carbon material such as activated carbon, graphene, etc., or a metal oxide such as MnO₂, Mn₃O₄, etc. is used as a catalyst for the electrochemical reaction of the positive electrode), or (c) air or oxygen (in which a Pt/C electrode or a metal oxide, a carbon material and the like supported on a Pt/C electrode is used as a catalyst for the electrochemical reaction of the positive electrode);
(5) the electrolyte on the positive electrode side is: (a) an aqueous solution or hydrogel electrolyte comprising a lithium salt, a sodium salt, a potassium salt, a zinc salt, an aluminium salt, a magnesium salt or a mixture thereof, or a mixture of the aqueous solution electrolyte and the hydrogel electrolyte, which may comprise an anion Cl⁻, Br⁻, ClO₄⁻ or the like; or (b) an aqueous solution or hydrogel electrolyte comprising a redox couple of Br₂/Br⁻, (Br⁻, Cl⁻)/ClBr₂⁻, Fe³⁺/Fe²⁺ or the like and comprising a lithium salt, a sodium salt, a potassium salt or a mixture thereof, or a mixture of the aqueous solution electrolyte and the hydrogel electrolyte. Further, the electrolyte may comprise methanol.

### 2) the negative electrode is in a neutral electrolyte; and the positive electrode is in a weakly acidic electrolyte:

(1) the separator is: (a) a polymeric cation-exchange membrane through which cations Li⁺, Na⁺, K⁺ or the like can reversibly pass, but protons cannot pass, or (b) a composite polymeric cation-exchange membrane through which cations Li⁺, Na⁺, K⁺ or the like can reversibly pass, but protons cannot pass; or (c) a polymeric anion-exchange membrane through which anions Cl⁻, Br⁻, SO₄²⁻. NO₃⁻ or the like can reversibly pass;
(2) the negative electrode is a metal magnesium or an alloy thereof or a modified product thereof;
(3) the electrolyte on the negative electrode side is an aqueous solution or hydrogel electrolyte comprising a magnesium salt, a lithium salt, a potassium salt, a sodium salt of anions Cl⁻, Br⁻, ClO₄⁻ or the like or a mixture thereof, or a mixture of the aqueous solution electrolyte and the hydrogel electrolyte;
(4) the positive electrode is (a) a positive electrode material capable of reversibly intercalating and deintercalating metal ions Li⁺, Na⁺, K+, Zn²⁺, Mg²⁺ or Al³⁺, or (b) an aqueous solution comprising Br₂/Br⁻, (Br⁻, Cl⁻)/ClBr₂⁻ or Fe³⁺/Fe²⁺ (in which a carbon material such as activated carbon, graphene, etc., or a metal oxide such as MnO₂, Mn₃O₄, etc. is used as a catalyst for the electrochemical reaction of the positive electrode), or (c) air or oxygen (in which a Pt/C electrode or a metal oxide, a carbon material and the like supported on a Pt/C electrode is used as a catalyst for the electrochemical reaction of the positive electrode);
(5) the electrolyte on the positive electrode side is: (a) an aqueous solution or hydrogel electrolyte comprising a lithium salt, a sodium salt, a potassium salt, a zinc salt, an aluminium salt, a magnesium salt or a mixture thereof, or a mixture of the aqueous solution electrolyte and the hydrogel electrolyte, which may comprise an anion Cl⁻, Br⁻, ClO₄⁻ or the like; or (b) an aqueous solution or hydrogel electrolyte comprising a redox couple of Br₂/Br⁻, (Br⁻, Cl⁻)/ClBr₂⁻, Fe³⁺/Fe²⁺ or the like and comprising a lithium salt, a sodium salt, a potassium salt or a mixture thereof, or a mixture of the aqueous solution electrolyte and the hydrogel electrolyte. Further, the electrolyte may comprise methanol.

### 3) the negative electrode is in an alkaline electrolyte; and the positive electrode is in an acidic electrolyte:

(1) the separator is: (a) a composite polymeric cation-exchange membrane through which cations Li⁺, Na⁺, K⁺ or the like can reversibly pass, but protons cannot pass, or (b) a composite polymeric cation/anion exchange membrane, wherein when the battery is assembled, the cation membrane faces the negative electrode side so that cations Li⁺, Na⁺, K⁺ or the like can reversibly pass through, and the anion membrane faces the positive electrode side so that anions Cl⁻, Br⁻ or the like can reversibly pass through;
(2) the negative electrode is a metal zinc, magnesium, aluminium or an alloy thereof or a modified product thereof;
(3) the electrolyte on the negative electrode side is an aqueous solution or hydrogel electrolyte comprising lithium hydroxide, sodium hydroxide, potassium hydroxide or a mixture thereof, or a mixture of the aqueous solution electrolyte and the hydrogel electrolyte, wherein the aqueous solution or the hydrogel may comprise other lithium salt, potassium salt, sodium salt, aluminium salt, zinc salt;
(4) the positive electrode is (a) an acidic aqueous solution comprising a redox couple of Cl₂/Cl⁻, Br₂/Br⁻, (Br⁻, Cl⁻)/ClBr₂⁻, Fe³⁺/Fe²⁺, VO₂⁺/VO²⁺, Ce⁴⁺/Ce³⁺, Cr³⁺/Cr²⁺, CrO₄²⁺/Cr³⁺, NpO₂²⁺/NpO₂⁺, IO₃⁻/I₂ or the like, or (b) PbO₂ and its modified product (i.e., a substance obtained by mixing or compounding PbO₂ with other materials, such as polymer-coated PbO₂, such as polypyrrole-coated PbO₂, or a substance obtained by mixing or compounding PbO₂ with a conductive material);
(5) the electrolyte on the positive electrode side is (a) a mixed aqueous solution or hydrogel electrolyte of an acidic aqueous solution comprising a redox couple of Br₂/Br⁻, (Br⁻, Cl⁻)/ClBr₂⁻, Fe³⁺/Fe²⁺, VO₂⁺/VO²⁺, Ce⁴⁺/Ce³⁺, Cr³⁺/Cr²⁺, CrO₄²⁺/Cr³⁺, NpO₂²⁺/NpO₂⁺, IO₃⁻/I₂, Pb²⁺/PbO₂ or a mixture thereof with an aqueous solution comprising a lithium salt, a potassium salt, a sodium salt or a mixture thereof, or a mixture of the aqueous solution electrolyte and the hydrogel electrolyte; or (b) an aqueous sulphuric acid solution or hydrogel electrolyte comprising a lithium salt, a potassium salt, a sodium salt or a mixture thereof, or a mixture of the aqueous solution electrolyte and the hydrogel electrolyte.

### 4) the negative electrode is in a neutral electrolyte; and the positive electrode is in an acidic electrolyte:

(1) the separator is: (a) a composite polymeric cation-exchange membrane through which cations Li⁺, Na⁺, K⁺ or the like can reversibly pass, but protons cannot pass; or (b) a polymeric anion-exchange membrane through which anions Cl⁻, Br⁻, SO₄²⁻. NO₃⁻ or the like can reversibly pass through;
(2) the negative electrode is a metal magnesium or an alloy thereof or a modified product thereof;
(3) the electrolyte on the negative electrode is an aqueous solution or hydrogel electrolyte comprising a magnesium salt, a lithium salt, a potassium salt, a sodium salt or mixtures thereof of an anion Cl⁻, Br⁻, ClO₄⁻ or the like, or a mixture of the aqueous solution electrolyte and the hydrogel electrolyte.
(4) the positive electrode is (a) an acidic aqueous solution comprising a redox couple of Cl₂/Cl⁻, Br₂/Br⁻, (Br⁻, Cl⁻)/ClBr₂⁻, Fe³⁺/Fe²⁺, VO₂⁺/VO²⁺, Ce⁴⁺/Ce³⁺, Cr³⁺/Cr²⁺, CrO₄²⁺/Cr³⁺, NpO₂²⁺/NpO₂⁺, IO₃⁻/I₂ or the like, or (b) PbO₂ and its modified product (i.e., a substance obtained by mixing or compounding PbO₂ with other materials, such as polymer-coated PbO₂, such as polypyrrole-coated PbO₂, or a substance obtained by mixing or compounding PbO₂ with a conductive material);
(5) the electrolyte on the positive electrode side is (a) a mixed aqueous solution or hydrogel electrolyte of an acidic aqueous solution comprising a redox couple of Br₂/Br⁻, (Br⁻, Cl⁻)/ClBr₂⁻, Fe³⁺/Fe²⁺, VO₂⁺/VO²⁺, Ce⁴⁺/Ce³⁺, Cr³⁺/Cr²⁺, CrO₄²⁺/Cr³⁺, NpO₂²⁺/NpO₂⁺, IO₃⁻/I₂, Pb²⁺/PbO₂ or the like or a mixture thereof with an aqueous solution of a lithium salt, a potassium salt, a sodium salt or a mixture thereof, or a mixture of the aqueous solution electrolyte and the hydrogel electrolyte; or (b) an aqueous sulphuric acid solution or hydrogel electrolyte comprising a lithium salt, a potassium salt, a sodium salt or a mixture thereof, or a mixture of the aqueous solution electrolyte and the hydrogel electrolyte.

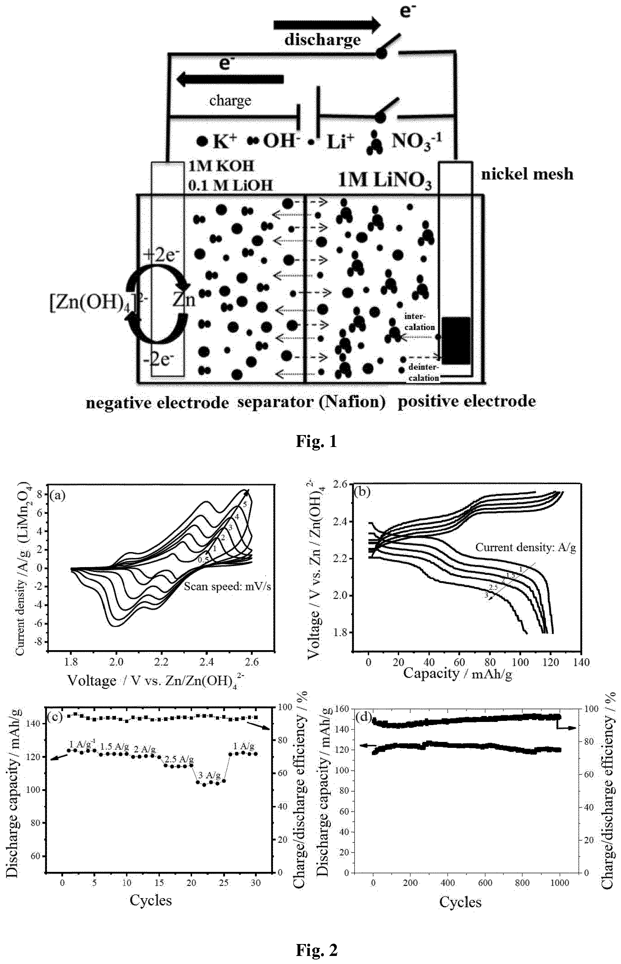

FIG. 1 illustrates a schematic view of the structure of the high energy density hybrid aqueous rechargeable battery according to the present invention. The high energy density hybrid aqueous rechargeable battery of the present invention uses a double aqueous solution and/or a hydrogel system, broadens the voltage stabilization window of the aqueous solution/gel battery, and uses metal zinc, magnesium or aluminium or its alloy with a lower redox potential and a higher specific capacity by mass or volume as a negative electrode. The voltage is 0.6 - 0.8 V higher than that of the common aqueous lithium battery, and the energy density is at least 60 Wh/kg higher than the common aqueous lithium battery. Since the aqueous solution or the hydrogel is used as the electrolyte, it has the advantages of high ion conductivity, low cost, easy mass production, safety, environmental friendliness and the like. Since the potential of the negative electrode material is stable, the positive electrode material (such as LiCoO₂, LiNiO₂, LiMn₂O₄, LiFePO₄, LiFeSO₄F, NaCoO₂, NaNiO₂, NaMn₂O₄, NaFePO₄, KCoO₂, KNiO₂, KMn₂O₄, KFePO₄, MnO₂, Prussian blue compounds (cobalt ferricyanide, copper ferricyanide, etc.) is very stable in the aqueous solution system and can reversibly react and excellent in the high current performance, thus it has good stability. In addition, the use of the polymeric ion-exchange membrane can stabilize the electrolytes of the positive electrode and the negative electrode. Therefore, the hybrid aqueous rechargeable battery has a high energy density, excellent stability, and good cycling performance.

The present invention also provides the use of the high energy density hybrid aqueous rechargeable battery in the storage and discharge of the electricity.

The high energy density hybrid aqueous rechargeable battery prepared by the present invention has a high working voltage, a high energy density, and excellent stability and cycling performance.

### DESCRIPTION OF THE DRAWINGS

FIG. 1 illustrates a schematic view of the structure of the high energy density hybrid aqueous rechargeable battery prepared according to the present invention (taking Zn (alkaline solution) // LiMn₂O₄ (neutral solution) battery as an example).
FIG. 2 illustrates Example 1: (a) CV curves at different scan speeds, (b) charge/discharge curves at different current densities, (c) rate performance, and (d) cycling curves of 1000 charge/discharge cycles.
FIG. 3 illustrates Example 3: (a) CV curves at a scan speed of 0.5mV/s, and (b) cycling curves for 200 charge/discharge cycles at a current density of 1 A/g.
FIG. 4 illustrates Example 4: (a) CV curves at a scan speed of 1mV/s, and (b) charge/discharge curves at different current densities.
FIG. 5 illustrates Example 7: (a) charge/discharge curves and (b) cycling curves, at a current density of 0.25 A/g.
FIG. 6 illustrates Example 8: (a) CV curves at different scan speeds, and (b) cycling curves for 300 charge/discharge cycles at a current density of 1 A/g.

### MODE FOR CARRYING OUT THE INVENTION

The invention will be described in more detail below by the examples and comparative examples, but the protection scope of the present invention would be not limited thereto.

### Comparative Example 1:

Metal zinc as the negative electrode, LiMn₂O₄ with a reversible capacity of 120 mAh/g as the active positive electrode material, Super-P (Shenzhen Jitian Chemical Co., Ltd.) as the conductive agent, polyvinylidene fluoride as the binder, and anhydrous ethanol as the solvent are stirred into a homogenous paste, and then coated on a stainless steel mesh to prepare a positive electrode piece. Nafion 117 membrane (DuPont, USA) is used as the separator, and the negative electrode side is a mixed aqueous solution electrolyte of 0.5 mol/L ZnAC₂/ 0.5 mol/L LiNO₃, and the positive electrode side is an aqueous solution electrolyte of 1 mol/L LiNO₃. After sealing, a chargeable/dischargeable aqueous lithium battery with LiMn₂O₄ as the positive electrode and metal zinc as the negative electrode is obtained. Tests are conducted at a current density of 1 A/g (calculated in the mass of the active positive electrode material, the same below), wherein the charge cut-off voltage is 2.1 V, and the discharge cut-off voltage is 1 V. According to the test results, the average discharge voltage and the energy density obtained from the weight of the active material of the electrode are obtained. For convenient comparison, these data are summarized in Table 1.

### Example 1:

Metal zinc as the negative electrode, LiMn₂O₄ with a reversible capacity of 120 mAh/g as the active positive electrode material, Super-P as the conductive agent, polyvinylidene fluoride as the binder, and anhydrous ethanol as the solvent are stirred into a homogeneous paste, and then coated on a stainless steel mesh to prepare a positive electrode piece. Nafion 117 membrane (DuPont, USA) is used as the separator, and the negative electrode side is a mixed aqueous solution electrolyte of 1 mol/L KOH / 0.1 mol/L LiOH, and the positive electrode side is an aqueous solution electrolyte of 1 mol/L LiNO₃. After sealing, a chargeable/dischargeable aqueous lithium battery with LiMn₂O₄ as the positive electrode and Metal zinc as the negative electrode is obtained. Charge/discharge performance and cycling tests are performed. According to the test results, the average discharge voltage and the energy density obtained from the weight of the active material of the electrode are obtained. For convenient comparison, these data are also summarized in Table 1. The CV curves at different scan speeds, charge/discharge curves at different current densities, rate performance, and cycling curves of 1000 charge/discharge cycles are illustrated in FIG. 2(a), FIG. 2(b), FIG. 2(c) and FIG. 2(d), respectively.

### Comparative Example 2:

Metal zinc as the negative electrode, LiFePO₄ with a reversible capacity of 140 mAh/g as the active positive electrode material, Super-P as the conductive agent, polyvinylidene fluoride as the binder, and anhydrous ethanol as the solvent are stirred into a homogeneous paste, and then coated on a stainless steel mesh to prepare a positive electrode piece. ASTOM cationic membrane (Shanghai Dingcheng Trading Co., Ltd.) is used as the separator, and the negative electrode side is a mixed aqueous solution electrolyte of 0.5 mol/L ZnAc₂/0.5 mol/L LiNO₃, and the positive electrode side is an aqueous solution electrolyte of 1 mol/L LiNO₃. After sealing, a chargeable/dischargeable aqueous lithium battery with LiFePO₄ as the positive electrode and metal zinc as the negative electrode is obtained. Tests are conducted at a current density of 1 A/g, wherein the charge cut-off voltage is 2 V, and the discharge cut-off voltage is 0.6 V. Again, according to the test results, the average discharge voltage and the energy density obtained from the weight of the active material of the electrode are obtained. For convenient comparison, these data are also summarized in Table 1.

### Example 2:

Metal zinc as the negative electrode, LiFePO4 with a reversible capacity of 140 mAh/g as the active material of positive electrode, Super-P as the conductive agent, polyvinylidene fluoride as the binder, and anhydrous ethanol as the solvent are stirred into a homogeneous paste, and then coated on a stainless steel mesh to prepare a positive electrode piece. ASTOM cationic membrane (Shanghai Dingcheng Trading Co., Ltd.) is used as the separator, and the negative electrode side is a mixed aqueous solution electrolyte of 1 mol/L KOH / 0.1 mol/L LiOH, and the positive electrode side is an aqueous solution electrolyte of 1 mol/L LiNO₃. After sealing, a rechargeable lithium ion battery with LiFePO₄ as the positive electrode and metal zinc as the negative electrode is obtained. Tests are conducted at a current density of 1 A/g, wherein the charge cut-off voltage is 2.4 V, and the discharge cut-off voltage is 1.2 V. Again, according to the test results, the average discharge voltage and the energy density obtained from the weight of the active material of the electrode are obtained. For convenient comparison, these data are also summarized in Table 1.

### Comparative Example 3:

Metal zinc as the negative electrode, AB/δ-MnO₂ (AB is acetylene black) as the active material of positive electrode, Super-P as the conductive agent, polyvinylidene fluoride as the binder, and anhydrous ethanol as the solvent are stirred into a homogeneous paste, and then coated on a graphite electrode to prepare a positive electrode piece. Nafion 117 membrane (DuPont, USA) is used as the separator, and the negative electrode side is a mixed aqueous solution electrolyte of 0.5 mol/L ZnAc₂ / 0.5 mol/L KAc, the positive electrode side is a mixed aqueous solution electrolyte of 0.1 mol/L Br₂ and 1 mol/L KBr, and the current collector is a graphite rod. After sealing, a Zn-Br₂ battery is obtained. Charge/discharge performance and cycling tests are performed. Again, according to the test results, the average discharge voltage and the energy density obtained from the weight of the active material of the electrode are obtained. For convenient comparison, these data are also summarized in Table 1.

### Example 3:

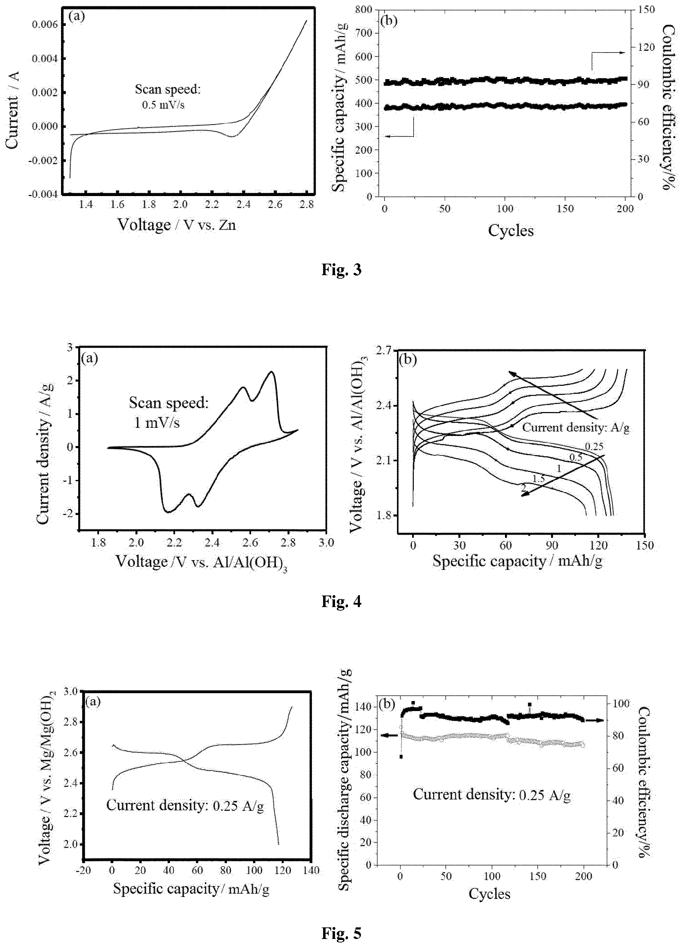

Metal zinc as the negative electrode AB/δ-MnO₂ (AB is acetylene black) as the active positive electrode material, Super-P as the conductive agent, polyvinylidene fluoride as the binder, and anhydrous ethanol as the solvent are stirred into a homogeneous paste, and then coated on a graphite electrode to prepare a positive electrode piece. Nafion 117 membrane (DuPont, USA) is used as the separator, and the negative electrode side is an aqueous solution electrolyte of 6 mol/L KOH, the positive electrode side is a mixed aqueous solution electrolyte of 0.1 mol/L Br₂ and 1 mol/L KBr, and the current collector is a graphite rod. After sealing, a novel Zn-Br₂ battery is obtained. Charge/discharge performance and cycling tests are performed. Again, according to the test results, the average discharge voltage and the energy density obtained from the weight of the active material of the electrode are obtained. For convenient comparison, these data are also summarized in Table 1. Its CV curves at a scan speed of 0.5 mV/s, and cycling curves of 200 charge/discharge cycles are illustrated in FIG. 3(a) and FIG. 3(b), respectively.

### Comparative Example 4:

Metal aluminium as the negative electrode LiMn₂O₄ with a reversible capacity of 120 mAh/g as the active material of positive electrode, Super-P as the conductive agent, polyvinylidene fluoride as the binder, and anhydrous ethanol as the solvent are stirred into a homogeneous paste, and then coated on a stainless steel mesh to prepare a positive electrode piece. ASTOM cationic membrane (Shanghai Dingcheng Trading Co., Ltd.) is used as the separator, and the negative electrode side is a mixed aqueous solution electrolyte of 0.5 mol/L AlCl₃/0.5 mol/L LiNO₃, and the positive electrode side is an aqueous solution electrolyte of 1 mol/L LiNO₃. After sealing, a chargeable/dischargeable aqueous lithium battery with LiMn₂O₄ as the positive electrode and metal aluminium as the negative electrode is obtained. Charge/discharge performance and cycling tests are performed. Again, according to the test results, the average discharge voltage and the energy density obtained from the weight of the active material of the electrode are obtained. For convenient comparison, these data are also summarized in Table 1.

### Example 4:

Metal aluminium as the negative electrode LiMn₂O₄ with a reversible capacity of 120 mAh/g as the active material of positive electrode, Super-P as the conductive agent, polyvinylidene fluoride as the binder, and anhydrous ethanol as the solvent are stirred into a homogeneous paste, and then coated on a stainless steel mesh to prepare a positive electrode piece. ASTOM cationic membrane (Shanghai Dingcheng Trading Co., Ltd.) is used as the separator, and the negative electrode side is a mixed aqueous solution electrolyte of 0.1 mol/L KOH / 1 mol/L LiOH, and the positive electrode side is an aqueous solution electrolyte of 1 mol/L LiNO₃. After sealing, a chargeable/dischargeable aqueous lithium battery with LiMn₂O₄ as the positive electrode and metal aluminium as the negative electrode is obtained. Charge/discharge performance and cycling tests are performed. Again, according to the test results, the average discharge voltage and the energy density obtained from the weight of the active material of the electrode are obtained. For convenient comparison, these data are also summarized in Table 1. Its CV curves at a scan speed of 1 mV/s, and cycling curves of charge/discharge cycles at different current densities are illustrated in FIG. 4(a) and FIG. 4(b), respectively.

### Comparative Example 5:

Metal zinc is used as the negative electrode, and a Pt/C electrode is used as the catalyst of the positive electrode (actually, air acts as the positive electrode). Nafion 117 membrane (DuPont, USA) is used as the separator, and the negative and positive electrode sides are aqueous solution electrolytes of 6 mol/L and 0.1 mol/L KOH, respectively. After sealing, a Zn-Air battery is obtained. Charge/discharge performance and cycling tests are performed. Again, according to the test results, the average discharge voltage and the energy density obtained from the weight of the active material of the electrode are obtained. For convenient comparison, these data are also summarized in Table 1.

### Example 5:

Metal zinc is used as the negative electrode, and a Pt/C electrode is used as the catalyst of positive electrode (actually, air acts as the positive electrode). Nafion 117 membrane (DuPont, USA) is used as the separator, and the negative electrode side is an aqueous solution electrolyte of 6 mol/L KOH, and the positive electrode side is an aqueous solution electrolyte of 1 mol/L LiNO₃. After sealing, a Zn-Air battery is obtained. Charge/discharge performance and cycling tests are performed. Again, according to the test results, the average discharge voltage and the energy density obtained from the weight of the active material of the electrode are obtained. For convenient comparison, these data are also summarized in Table 1.

### Comparative Example 6:

Activated carbon as the negative electrode, activated carbon as the positive electrode, Super-P as the conductive agent, polyvinylidene fluoride as the binder, and anhydrous ethanol as the solvent are stirred into a homogeneous paste, and then coated on a stainless steel mesh to prepare positive and negative electrode pieces. An aqueous solution of 0.5 mol/L H₂SO₄ + 0.5 mol/L LiBr is used as the electrolyte, and after sealing, a chargable/dischargeable capacitor with Br₂/Br⁻ (activated carbon as a catalyst) as the positive electrode and activated carbon as the negative electrode is obtained. Charge/discharge performance and cycling tests are performed. Again, according to the test results, the average discharge voltage and the energy density obtained from the weight of the active material of the electrode are obtained. For convenient comparison, these data are also summarized in Table 1.

### Example 6:

Metal magnesium as the negative electrode, activated carbon as the positive electrode, Super-P as the conductive agent, polyvinylidene fluoride as the binder, and anhydrous ethanol as the solvent are stirred into a homogeneous paste, and then coated on a stainless steel mesh to prepare a positive electrode piece. A composite polymeric cationic membrane composed of "ASTOM cationic membrane / PMMA (0.5 mol/L LiClO₄) / ASTOM cationic membrane" is used as the separator, and the negative electrode side is a mixed aqueous solution electrolyte of 0.5 mol/L MgCl₂ / 0.5 mol/L LiCl, and the positive electrode side is an aqueous solution electrolyte of 0.5 mol/L H₂SO₄ / 0.5 mol/L LiBr. After sealing, a chargeable/dischargeable battery with Br₂/Br⁻ (activated carbon as a catalyst) as the positive electrode and metal magnesium as the negative electrode is obtained. Charge/discharge performance and cycling tests are performed. Again, according to the test results, the average discharge voltage and the energy density obtained from the weight of the active material of the electrode are obtained. For convenient comparison, these data are also summarized in Table 1.

### Example 7:

Metal magnesium as the negative electrode, LiMn₂O₄ with a reversible capacity of 120 mAh/g as the active material of positive electrode, Super-P as the conductive agent, polyvinylidene fluoride as the binder, and anhydrous ethanol as the solvent are stirred into a homogeneous paste, and then coated on a stainless steel mesh to prepare a positive electrode piece. Nafion 117 membrane (DuPont, USA) is used as a separator, and the negative electrode side is a mixed aqueous solution electrolyte of 0.1 mol/L KOH / 1 mol/L LiCl, and the positive electrode side is an aqueous solution electrolyte of 1 mol/L LiNO₃. After sealing, a chargeable/dischargeable aqueous lithium battery with LiMn₂O₄ as the positive electrode and metal magnesium as the negative electrode is obtained. Charge/discharge performance and cycling tests are performed. Again, according to the test results, the average discharge voltage and the energy density obtained from the weight of the active material of the electrode are obtained.

For convenient comparison, these data are also summarized in Table 1. Its charge/discharge curves and cycling curves of 200 charge/discharge cycles at a current density of 0.25 A/g are illustrated in FIG. 5(a) and FIG. 5(b), respectively.

### Example 8:

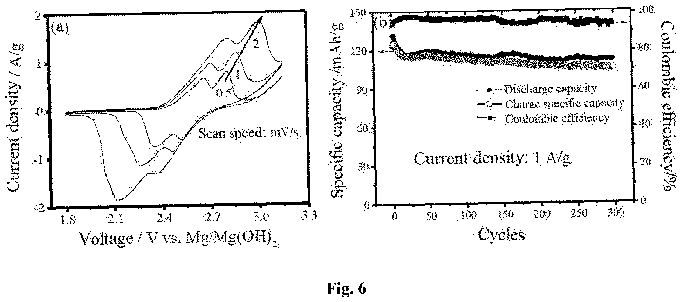

Metal magnesium as the negative electrode, LiMn₂O₄ with a reversible capacity of 120 mAh/g as the active material of positive electrode, Super-P as the conductive agent, polyvinylidene fluoride as the binder, and anhydrous ethanol as the solvent are stirred into a homogeneous paste, and then coated on a stainless steel mesh to prepare a positive electrode piece. Polysulfone anion-exchange membrane is used as the separator, and the negative electrode side is a mixed aqueous solution electrolyte of 0.5 mol/L KOH / 1 mol/L LiOH, and the positive electrode side is a mixed aqueous solution electrolyte of 0.5 mol/L KOH / 1 mol/L LiCl. After sealing, a chargeable/dischargeable aqueous lithium battery with LiMn₂O₄ as the positive electrode and metal magnesium as the negative electrode is obtained. Charge/discharge performance and cycling tests are performed. Again, according to the test results, the average discharge voltage and the energy density obtained from the weight of the active material of the electrode are obtained. For convenient comparison, these data are also summarized in Table 1. Its CV curves at different scan speeds and cycling curves of 300 charge/discharge cycles at a current density of 1 A/g are illustrated in FIG. 6(a) and FIG. 6(b), respectively.

**Table 1 Partial data and results of comparative examples and examples**

| Examples | Negative electrode (electrolyte) | Positive electrode (electrolyte) | Average discharge voltage (V) | Energy density (Wh/kg) * | Rate or cycling performance |
|---|---|---|---|---|---|
| Comparative Example 1 | Metal Zinc **(0.5 mol/L ZnAc₂, 0.5 mol/L LiNO₃) | LiMn₂O₄ (1 mol/L LiNO₃) | 1.65 | 175 | capacity maintained at 92% after 1000 cycles (1 A/g) |
| Example 1 | Metal Zinc **(1 mol/L KOH, 0.1 mol/L LiOH) | LiMn₂O₄ (1 mol/L LiNO3) | 2.24 | 244 | 103 mAh/g (3 A/g); no fading in capacity after 1000 cycles (1 A/g) |
| Comparative Example 2 | Metal Zinc **(0.5 mol/L ZnAc₂, 0.5 mol/L LiNO₃) | LiFePO₄ (1 mol/L LiNO₃) | 1.15 | 137 | capacity maintained at 88% after 1000 cycles (1 A/g) |
| Example 2 | Metal Zinc **(1 mol/L KOH, 0.1 mol/L LiOH) | LiFePO₄ (1 mol/L LiNO₃) | 1.75 | 209 | No fading in capacity after 1000 cycles (1 A/g) |
| Comparative Example 3 | Metal Zinc **(0.5 mol/L ZnAc₂,0.5 mol/L KAc) | Graphite rod (0.1 mol/L Br₂, 1 mol/L KBr) | 1.7 | 441 | capacity maintained at 90% after 200 cycles (1 A/g) |
| Example 3 | Metal Zinc **(6 mol/L KOH) | Graphite rod (0.1 mol/L Br₂, 1 mol/L KBr) | 2.1 | 500 | No fading in capacity after 200 cycles (1 A/g) |
| Comparative Example 4 | Metal aluminium **(0.5 mol/L AlCl₃, 0.5 mol/L LiNO₃) | LiMn₂O₄ (1 mol/L LiNO₃) | 1.6 | 184 | capacity maintained at 50% after 100 cycles (1 A/g) |
| Example 4 | Metal aluminium **(0.1 mol/L KOH, 1 mol/L LiCl) | LiMn₂O₄ (1 mol/L LiNO₃) | 2.38 | 274 | capacity maintained at 95% after 300 cycles (1 A/g) |
| Comparative Example 5 | Metal Zinc **(6 mol/L KOH) | Air (0.1 mol/L KOH) | 1.0 | 400 | / |
| Example 5 | Metal Zinc **(6 mol/L KOH) | Air (1 mol/L LiNO₃) | 1.5 | 600 | / |
| Comparative Example 6 | Activated carbon (0.5 mol/L H₂SO₄, 0.5 mol/L LiBr) | Activated carbon (0.5 mol/L H₂SO₄, 0.5 mol/L LiBr) | 0.5 | 45 | capacity maintained at 91% after 100 cycles (1 A/g) |
| Example 6 | Metal magnesium **(0.5 mol/L MgCl₂, 0.5 M LiCl) | Activated carbon (0.5 mol/L H₂SO₄, 0.5 mol/L LiBr) | 2.3 | 600 | capacity maintained at 95% after 100 cycles (1 A/g) |
| Example 7 | Metal magnesium **(0.1 mol/L KOH, 1 mol/L LiCl) | LiMn₂O₄ (1 mol/L LiNO₃) | 2.5 | 284 | capacity maintained at 87% after 200 cycles (106 mAh/g, 0.25 A/g) |
| Example 8 | Metal magnesium **(0.5 mol/L KOH, 1 mol/L LiCl) | LiMn₂O₄ (1 mol/L LiNO₃) | 2.3 | 261 | capacity maintained at 85.5% after 300 cycles (112 mAh/g, 1 A/g) |

| | | | | | |
|---|---|---|---|---|---|
| *: Data calculated based on the actual capacity of the positive and negative active materials and the actual average voltage; **: The negative electrode material is calculated based on that the amount of metal element (zinc, magnesium, aluminium) is 1 mole. | | | | | |

As can be seen from Table 1, the energy densities of the Examples are significantly higher than those of the Comparative Examples using the same positive electrodes by 60 Wh/kg or more, and the cycling performances are also greatly improved compared with the Comparative Examples.

## Claims

1. A hybrid aqueous rechargeable battery, wherein the battery comprises a positive electrode and a negative electrode, and wherein the positive electrode and the negative electrode are in aqueous electrolytes with different pHs respectively.

2. The battery according to claim 1, wherein the pH of the positive electrode electrolyte is lower than that of the negative electrode electrolyte.

3. The battery according to claim 1 or 2, wherein the negative electrode is in an alkaline or neutral electrolyte; and the positive electrode is in a neutral, weakly acidic or acidic electrolyte.

4. The battery according to claim 3, wherein when the negative electrode is in an alkaline electrolyte, the positive electrode is in a neutral, acidic or weakly acidic electrolyte; and when the negative electrode is in a neutral electrolyte, the positive electrode is in a weakly acidic or acidic electrolyte.

5. The battery according to any one of claims 1 to 4, wherein the aqueous electrolyte is an aqueous solution or hydrogel electrolyte.

6. The battery according to any one of claims 1 to 5, further comprising a separator selected from the group consisting of: (a) a polymeric cation-exchange membrane through which Li⁺, Na⁺ or K⁺ can reversibly pass, but protons cannot pass, or (b) a composite polymeric cationic membrane through which Li⁺, Na⁺ or K⁺ can reversibly pass, but protons cannot pass; or (c) a polymeric anion-exchange membrane through which Cl⁻, Br⁻, SO₄²⁻ or NO₃⁻ can reversibly pass; or (d) a composite polymeric cation/anion exchange membrane.

7. The battery according to any one of claims 1 to 6, wherein when the negative electrode electrolyte is alkaline and the positive electrode electrolyte is neutral, a polymeric cation-exchange membrane or a composite polymeric cation-exchange membrane is selected as the separator; and when the negative electrode electrolyte is neutral and the positive electrode electrolyte is weakly acidic, a polymeric cation-exchange membrane or a composite polymeric cation-exchange membrane or a polymeric anion-exchange membrane is selected as the separator; and when the negative electrode electrolyte is alkaline and the positive electrode electrolyte is acidic, a composite polymeric cation-exchange membrane or a composite polymeric cation/anion exchange membrane is selected as the separator; and when the negative electrode electrolyte is neutral and the positive electrode electrolyte is acidic, a composite polymeric cation-exchange membrane or a polymeric anion-exchange membrane is selected as the separator.

8. The battery according to any one of claims 1 to 7, wherein the positive electrode material is: (a) a positive electrode material capable of reversibly intercalating and deintercalating metal ions Li⁺, Na⁺, K⁺, Zn²⁺, Mg²⁺ or Al³⁺, or (b) an aqueous solution comprising Br₂/Br⁻, (Br⁻, Cl⁻)/ClBr₂⁻ or Fe³⁺/Fe²⁺, or (c) air or oxygen, or (d) an acidic aqueous solution comprising a redox couple of Cl₂/Cl⁻, Br₂/Br⁻, (Br⁻, Cl⁻)/ClBr₂⁻, Fe³⁺/Fe²⁺, VO₂⁺/VO²⁺, Ce⁴⁺/Ce³⁺, Cr³⁺/Cr²⁺, CrO₄²⁺/Cr³⁺, NpO₂²⁺/NpO₂⁺ or IO₃⁻/I₂, or (e) PbO₂ and its modified product.

9. The battery according to claim 8, wherein
when the positive electrode is in a neutral or weakly acidic electrolyte, the positive electrode material is: (a) a positive electrode material capable of reversibly intercalating and deintercalating metal ions Li⁺, Na⁺, K⁺, Zn²⁺, Mg²⁺ or Al³⁺, or (b) an aqueous solution comprising Br₂/Br⁻, (Br⁻, Cl⁻)/ClBr₂⁻ or Fe³⁺/Fe²⁺, or (c) air or oxygen;
when the positive electrode is in an acidic electrolyte, the positive electrode material is (a) an acidic aqueous solution comprising a redox couple of Cl₂/Cl⁻, Br₂/Br⁻, (Br⁻, Cl⁻)/ClBr₂⁻, Fe³⁺/Fe²⁺, VO₂⁺/NO²⁺, Ce⁴⁺/Ce³⁺, Cr³⁺/Cr²⁺, CrO₄²⁺/Cr³⁺, NpO₂²⁺/NpO₂⁺, or IO₃⁻/I₂, or (b) PbO₂ and its modified product.

10. The battery according to any one of claims 1 to 9, wherein the negative electrode material is zinc, magnesium, aluminium or an alloy thereof or a modified product thereof.

11. The battery according to claim 10, wherein when the negative electrode is in an alkaline electrolyte, the negative electrode material is zinc, magnesium, aluminium or an alloy thereof or a modified product thereof; and when the negative electrode is in a neutral electrolyte, the negative electrode material is magnesium or an alloy thereof or a modified product thereof.

12. The battery according to claim 3, wherein
the alkaline electrolyte is an aqueous solution or hydrogel electrolyte comprising lithium hydroxide, sodium hydroxide, potassium hydroxide or a mixture thereof, or a mixture of the aqueous solution electrolyte and the hydrogel electrolyte;
the neutral or weakly acidic electrolyte is (a) an aqueous solution or hydrogel electrolyte comprising a lithium salt, a sodium salt, a potassium salt, a zinc salt, an aluminium salt, a magnesium salt or a mixture thereof, or a mixture of the aqueous solution electrolyte and the hydrogel electrolyte; or (b) an aqueous solution or hydrogel electrolyte comprising a redox couple of Br₂/Br⁻, (Br⁻, Cl⁻)/ClBr₂⁻ or Fe³⁺/Fe²⁺ and comprising a lithium salt, a sodium salt, a potassium salt or a mixture thereof, or a mixture of the aqueous solution electrolyte and the hydrogel electrolyte;
the weakly acidic electrolyte is (a) a mixed aqueous solution or hydrogel electrolyte of an acidic aqueous solution comprising a redox couple of Cl₂/Cl⁻, Br₂/Br⁻, (Br⁻,Cl⁻)/ClBr₂⁻, Fe³⁺/Fe²⁺, VO₂⁺NO²⁺, Ce⁴⁺/Ce³⁺, Cr³⁺/Cr²⁺, CrO₄²⁺/Cr³⁺, NpO₂²⁺/NpO₂⁺, IO₃⁻/I₂, Pb²⁺/PbO₂ or a mixture thereof with an aqueous solution comprising a lithium salt, a potassium salt, a sodium salt or a mixture thereof, or a mixture of the aqueous solution electrolyte and the hydrogel electrolyte; or (b) an aqueous sulphuric acid solution or hydrogel electrolyte comprising a lithium salt, a potassium salt, a sodium salt or a mixture thereof, or a mixture of the aqueous solution electrolyte and the hydrogel electrolyte.

13. The battery according to any one of claims 1 to 12, comprising a separator, a negative electrode, a positive electrode and an electrolyte, and including the following four systems:
**1) the negative electrode is in an alkaline electrolyte; and the positive electrode is in a neutral electrolyte:**
(1) the separator is: (a) a polymeric cation-exchange membrane through which Li⁺, Na⁺ or K⁺ can reversibly pass, but protons cannot pass, or (b) a composite polymeric cation-exchange membrane through which cations Li⁺, Na⁺ or K⁺ can reversibly pass, but protons cannot pass;
(2) the negative electrode is a metal zinc, magnesium, aluminium or an alloy thereof or a modified product thereof;
(3) the electrolyte on the negative electrode side is an aqueous solution or hydrogel electrolyte comprising lithium hydroxide, sodium hydroxide, potassium hydroxide or a mixture thereof, or a mixture of the aqueous solution electrolyte and the hydrogel electrolyte;
(4) the positive electrode is: (a) a positive electrode material capable of reversibly intercalating and deintercalating metal ions Li⁺, Na⁺, K⁺, Zn²⁺, Mg²⁺ or Al³⁺, or (b) an aqueous solution comprising Br₂/Br⁻, (Br⁻, Cl⁻)/ClBr₂⁻ or Fe³⁺/Fe²⁺, or (c) air or oxygen;
(5) the electrolyte on the positive electrode side is: (a) an aqueous solution or hydrogel electrolyte comprising a lithium salt, a sodium salt, a potassium salt, a zinc salt, an aluminium salt, a magnesium salt or a mixture thereof, or a mixture of the aqueous solution electrolyte and the hydrogel electrolyte; or (b) an aqueous solution or hydrogel electrolyte comprising a redox couple of Br₂/Br⁻, (Br⁻, Cl⁻)/ClBr₂⁻ or Fe³⁺/Fe²⁺ and comprising a lithium salt, a sodium salt, a potassium salt or a mixture thereof, or a mixture of the aqueous solution electrolyte and the hydrogel electrolyte;
**2) the negative electrode is in a neutral electrolyte; and the positive electrode is in a weakly acidic electrolyte:**
(1) the separator is: (a) a polymeric cation-exchange membrane through which Li⁺, Na⁺ or K⁺ can reversibly pass, but protons cannot pass, or (b) a composite polymeric cation-exchange membrane through which Li⁺, Na⁺ or K⁺ can reversibly pass, but protons cannot pass; or (c) a polymeric anion-exchange membrane through which Cl⁻, Br⁻, SO₄²⁻ or NO₃⁻ can reversibly pass;
(2) the negative electrode is a metal magnesium or an alloy thereof or a modified product thereof;
(3) the electrolyte on the negative electrode side is an aqueous solution or hydrogel electrolyte comprising a magnesium salt, a lithium salt, a potassium salt, a sodium salt or mixtures thereof of Cl⁻, Br⁻ or ClO₄⁻, or a mixture of the aqueous solution electrolyte and the hydrogel electrolyte;
(4) the positive electrode is: (a) a positive electrode material capable of reversibly intercalating and deintercalating metal ions Li⁺, Na⁺, K⁺, Zn²⁺, Mg²⁺ or Al³⁺, or (b) an aqueous solution comprising Br₂/Br⁻, (Br⁻, Cl⁻)/ClBr₂⁻ or Fe³⁺/Fe²⁺, or (c) air or oxygen;
(5) the electrolyte on the positive electrode side is: (a) an aqueous solution or hydrogel electrolyte comprising a lithium salt, a sodium salt, a potassium salt, a zinc salt, an aluminium salt, a magnesium salt or a mixture thereof, or a mixture of the aqueous solution electrolyte and the hydrogel electrolyte; or (b) an aqueous solution or hydrogel electrolyte comprising a redox couple of Br₂/Br⁻, (Br⁻, Cl⁻)/ClBr₂⁻ or Fe³⁺/Fe²⁺ and comprising a lithium salt, a sodium salt, a potassium salt or a mixture thereof, or a mixture of the aqueous solution electrolyte and the hydrogel electrolyte;
**3) the negative electrode is in an alkaline electrolyte; and the positive electrode is in an acidic electrolyte:**
(1) the separator is: (a) a polymeric cation-exchange membrane through which Li⁺, Na⁺ or K⁺ can reversibly pass, but protons cannot pass, or (b) a composite polymeric cation/anion exchange membrane;
(2) the negative electrode is a metal zinc, magnesium, aluminium or an alloy thereof or a modified product thereof;
(3) the electrolyte on the negative electrode side is an aqueous solution or hydrogel electrolyte comprising lithium hydroxide, sodium hydroxide, potassium hydroxide or a mixture thereof, or a mixture of the aqueous solution electrolyte and the hydrogel electrolyte;
(4) the positive electrode is (a) an acidic aqueous solution comprising a redox couple of Cl₂/Cl⁻, Br₂/Br⁻, (Br⁻,Cl⁻)/ClBr₂⁻, Fe³⁺/Fe²⁺, VO₂⁺/VO²⁺, Ce⁴⁺/Ce³⁺, Cr³⁺/Cr²⁺, CrO₄²⁺/Cr³⁺, NpO₂²⁺/NpO₂⁺, or IO₃⁻/I₂, or (b) PbO₂ and its modified product;
(5) the electrolyte on the positive electrode side is: (a) a mixed aqueous solution or hydrogel electrolyte of an acidic aqueous solution comprising a redox couple of Br₂/Br⁻, (Br⁻, Cl⁻)/ClBr₂⁻, Fe³⁺/Fe²⁺, VO₂⁺/VO²⁺, Ce⁴⁺/Ce³⁺, Cr³⁺/Cr²⁺, CrO₄²⁺/Cr³⁺, NpO₂²⁺/NpO₂⁺, IO₃⁻/I₂, Pb²⁺/PbO₂ or a mixture thereof with an aqueous solution comprising a lithium salt, a potassium salt, a sodium salt or a mixture thereof, or a mixture of the aqueous solution electrolyte and the hydrogel electrolyte; or (b) an aqueous sulphuric acid solution or hydrogel electrolyte comprising a lithium salt, a potassium salt, a sodium salt or a mixture thereof, or a mixture of the aqueous solution electrolyte and the hydrogel electrolyte;
**4) the negative electrode is in a neutral electrolyte; and the positive electrode is in an acidic electrolyte:**
(1) the separator is: (a) a composite polymeric cation-exchange membrane through which Li⁺, Na⁺ or K⁺ can reversibly pass, but protons cannot pass; or (b) a polymeric anion-exchange membrane through which Cl⁻, Br⁻, SO₄²⁻ or NO₃⁻ can reversibly pass through;
(2) the negative electrode is a metal magnesium or an alloy thereof or a modified product thereof;
(3) the electrolyte on the negative electrode side is an aqueous solution or hydrogel electrolyte comprising a magnesium salt, a lithium salt, a potassium salt, a sodium salt or mixtures thereof of Cl⁻, Br⁻ or ClO₄⁻, or a mixture of the aqueous solution electrolyte and the hydrogel electrolyte.
(4) the positive electrode is (a) an acidic aqueous solution comprising a redox couple of Cl₂/Cl⁻, Br₂/Br⁻, (Br⁻, Cl⁻)/ClBr₂⁻, Fe³⁺/Fe²⁺, VO₂⁺/VO²⁺, Ce⁴⁺/Ce³⁺, Cr³⁺/Cr²⁺, CrO₄²⁺/Cr³⁺, NpO₂²⁺/NpO₂⁺, or IO₃⁻/I₂, or (b) PbO₂ and its modified product;
(5) the electrolyte on the positive electrode side is: (a) a mixed aqueous solution or hydrogel electrolyte of an acidic aqueous solution comprising a redox couple of Br₂/Br⁻, (Br⁻, Cl⁻)/ClBr₂⁻, Fe³⁺/Fe²⁺, VO₂⁺/VO²⁺, Ce⁴⁺/Ce³⁺, Cr³⁺/Cr²⁺, CrO₄²⁺/Cr³⁺, NpO₂²⁺/NpO₂⁺, IO₃⁻/I₂, Pb²⁺/PbO₂ or a mixture thereof with an aqueous solution comprising a lithium salt, a potassium salt, a sodium salt or a mixture thereof, or a mixture of the aqueous solution electrolyte and the hydrogel electrolyte; or (b) an aqueous sulphuric acid solution or hydrogel electrolyte comprising a lithium salt, a potassium salt, a sodium salt or a mixture thereof, or a mixture of the aqueous solution electrolyte and the hydrogel electrolyte.

14. Use of the battery according to any one of claims 1 to 13 in the storage and the discharge of electricity.
